# EUROPEAN PATENT APPLICATION

(11) **EP 4 481 203 A1**
(43) Date of publication of application: **25.12.2024**
(21) Application number: 24183170.0
(22) Date of filing: 19.06.2024
(51) Int. Cl.: F04D 29/02, F04D 29/28

(54) **A FAN WHEEL AND A METHOD OF MANUFACTURING THEREOF**

(30) Priority: 19.06.2023 US 202363508919 P
(71) Applicant: Carrier Corporation, Palm Beach Gardens, FL 33418 (US)
(72) Inventor: RAU, Mark, Fairport (US)
(74) Representative: Dehns

(57) **Abstract**

A fan wheel (100) and a method (200) of manufacturing thereof are disclosed. The fan wheel comprises a first wheel portion (102) comprising a first plurality of impeller blades (102-2), and a second wheel portion (104) comprising a second plurality of impeller blades (104-2), wherein the first wheel portion is over-molded to the second wheel portion to attach the first wheel portion to the second wheel portion.

## Description

### BACKGROUND

This invention relates to the field of fan wheels, and more particularly, a simple, cost-effective, and efficient method for manufacturing fan wheels for furnaces or HVAC applications.

Existing techniques for manufacturing a fan wheel for a furnace or fan coil applications in gas furnace systems or heating, ventilation, air conditioning, and cooling (HVAC) systems may involve welding of different portions of the fan wheel in a vibration welding machine, which may be expensive, inefficient, less repeatable, prone to manufacturing defects, and has high scrap rates.

### SUMMARY

Described herein is a fan wheel. The fan wheel comprises a first wheel portion comprising a first plurality of impeller blades, and a second wheel portion comprising a second plurality of impeller blades, wherein the first wheel portion is over-molded to the second wheel portion to attach the first wheel portion to the second wheel portion.

The first wheel portion may be over-molded to the second wheel portion using one or more molds having a predefined inner profile such that an over-molded portion of a predefined shape, based on the predefined inner profile, is formed at a connecting region between the first wheel portion and the second wheel portion.

The first wheel portion may comprise a first shroud at a first end of the first wheel portion, and a first annular portion at a second end of the first wheel portion, wherein the first plurality of impeller blades extends between the first shroud and the first annular portion, such that a first end of the first plurality of impeller blades is attached to and spaced about a periphery of the first shroud and the first annular portion is attached to inner edges of a second end of the first plurality of impeller blades.

The second wheel portion may comprise a second shroud at a first end of the second wheel portion, and a second annular portion at a second end of the second wheel portion, wherein the second plurality of impeller blades extends between the second shroud and the second annular portion, such that a first end of the second plurality of impeller blades is attached to and spaced about a periphery of the second shroud and the second annular portion is attached to inner edges of a second end of the second plurality of impeller blades.

The first annular portion may be connected and over-molded to the second annular portion to form the over-molded portion of the predefined shape at an annular region of the first annular portion and the second annular portion and connect the first wheel portion to the second wheel portion.

The over-molded portion may have a circular profile comprising one or more slots configured circumferentially on one or both sides of the over-molded portion, wherein the one or more slots are configured to accommodate a fastener of predefined weights to facilitate balancing the fan wheel.

The fan wheel may comprise a central hub integrally formed in the over-molded section.

The fan wheel may comprise a central metallic hub configured coaxially at a center of a connecting region between the first wheel portion and the second wheel portion, wherein the metallic hub is over-molded to the first wheel portion and/or the second wheel portion.

The hub may be adapted to accommodate a drive shaft of a motor therewithin and comprises a threaded insert to facilitate mounting of the fan wheel to the drive shaft.

The fan wheel may comprise a support ring positioned between the first wheel portion and the second wheel portion, such that upon over-molding the first wheel portion and the second wheel portion, an end of each of the first plurality of impeller blades is supported at a first surface of the support ring and an end of each of the second plurality of impeller blades is supported at a second surface of the support ring.

One or both of the first plurality of impeller blades and the second plurality of impeller blades may be configured as backward curved impeller blades or as forward curved impeller blades.

Also described herein is a method for manufacturing a fan wheel. The method comprises the steps of forming a first wheel portion comprising a first plurality of impeller blades, forming a second wheel portion comprising a second plurality of impeller blades, and over-molding the first wheel portion to the second wheel portion to form the fan wheel.

The method of over-molding may comprise the steps of fixing one or more molds of a predefined inner profile on one or both sides of a connecting region between the first wheel portion and the second wheel portion, injecting a molding material within the one or more fixed molds and allowing the injection molding material to cool, cure, or solidify, and allowing removal of the fan wheel from the one or more molds upon the cooling, curing or solidifying of the molding material to form an over-molded portion of a predefined shape, based on the predefined inner profile, at the connecting region between the first wheel portion and the second wheel portion, wherein the over-molded portion attaches the first wheel portion to the second wheel portion.

The method of forming the first wheel portion may comprise the steps of forming a first shroud, forming a first annular portion, and affixing the first plurality of impeller blades between the first shroud and the first annular portion, such that a first end of the first plurality of impeller blades is attached to and spaced about a periphery of the first shroud and the first annular portion is attached to inner edges of a second end of the first plurality of impeller blades. Further, the method of forming the second wheel portion may comprise the steps of forming a second shroud, forming a second annular portion, and affixing the second plurality of impeller blades between the second shroud and the second annular portion, such that a first end of the second plurality of impeller blades is attached to and spaced about a periphery of the second shroud and the second annular portion is attached to inner edges of a second end of the second plurality of impeller blades.

The method may further comprise the steps of connecting and over-molding the first annular portion to the second annular portion to form the over-molded portion of the predefined shape at an annular region of the first annular portion and the second annular portion and correspondingly over-molding the first wheel portion to the second wheel portion.

The method may comprise the steps of forming a central hub comprising a threaded insert, integrally in the over-molded section, wherein the one or more molds have the predefined inner profile based on the predefined shape of the over-molded section and the hub to be integrally formed.

The method may comprise the steps of over-molding a central hub comprising a threaded insert, to the first wheel portion and/or the second wheel portion.

The method may comprise the steps of forming and positioning a support ring between the first wheel portion and the second wheel portion and further over-molding the first wheel portion to the second wheel portion, such that upon over-molding, an end of each of the first plurality of impeller blades is supported at a first surface of the support ring and an end of each of the second plurality of impeller blades is supported at a second surface of the support ring.

The method may comprise the steps of forming the over-molded portion having a circular profile comprising one or more slots being configured circumferentially on one or both sides of the over-molded portion, wherein the one or more slots are configured to accommodate a fastener of predefined weights to facilitate in balancing the fan wheel.

The method may comprise the steps of forming one or both of the first plurality of impeller blades and the second plurality of impeller blades as backward curved impeller blades or as forward curved impeller blades.

The foregoing summary is illustrative only and is not intended to be in any way limiting. In addition to the illustrative aspects, embodiments, and features described above, further aspects, embodiments, features, and techniques of the subject disclosure will become more apparent from the following description taken in conjunction with the drawings.

### BRIEF DESCRIPTION OF THE DRAWINGS

The accompanying drawings are included to provide a further understanding of the subject disclosure and are incorporated in and constitute a part of this specification. The drawings illustrate exemplary embodiments of the subject disclosure and, together with the description, serve to explain the principles of the subject disclosure.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A illustrates an exemplary isometric view of a fan wheel.
FIG. 1B illustrates an exemplary cross-sectional side view of a fan wheel with an over-molded hub.
FIG. 1C illustrates an exemplary cross-sectional side view of a fan wheel with an integrated hub.
FIG. 1D illustrates an exemplary cross-sectional isometric view of a fan wheel in a pre over-molded state without the over-molding portion.
FIGs. 1E and 1F illustrate exemplary cross-sectional isometric views of a fan wheel in a post over-molded state having the over-molded portion.
FIG. 2 illustrates an exemplary flow diagram of a method for manufacturing a fan wheel for a blower assembly.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the scope of the subject disclosure as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or spatial orientation of aspects of such components, respectively, first wheel portion, the second wheel portion, the over-molded portion, the support ring, and corresponding components, described herein may be oriented in any desired direction.

Heating, ventilation, and air conditioning (HVAC) systems and gas furnace systems may typically involve a blower assembly comprising a fan wheel that may be driven by a motor to supply air through ducts connected to the blower assembly. Existing fan wheels involve multiple components or portions that may be welded together in a vibration welding machine. The design of the fan wheel is typically limited by the manufacturing process used to produce such fan wheels.

Existing fan wheels may include a first wheel portion including a first plurality of impeller blades and a second wheel portion including a second plurality of impeller blades which may be welded to a support ring or disk. Further, a central hub may be welded to the first or second wheel portion to form the fan wheel, which may accommodate a drive shaft of the motor to connect the fan wheel to the motor. However, the welding techniques may generally be expensive, inefficient, less repeatable, prone to manufacturing defects, and has high scrap rates.

In addition, the welding techniques may generally be expensive with the wastage of materials and may also limit the use of only a limited number of weldable materials for manufacturing the fan wheel. Moreover, balancing the fan wheels manufactured using welding techniques may be difficult to achieve repeatability and add costly additive or subtractive balance corrections. Thus, there is a need to provide a simple, improved, cost-effective, repeatable, and efficient lean manufacturing method for fan wheels, which may allow the use a wide range of injection moldable materials for blower wheel or blower fan manufacturing.

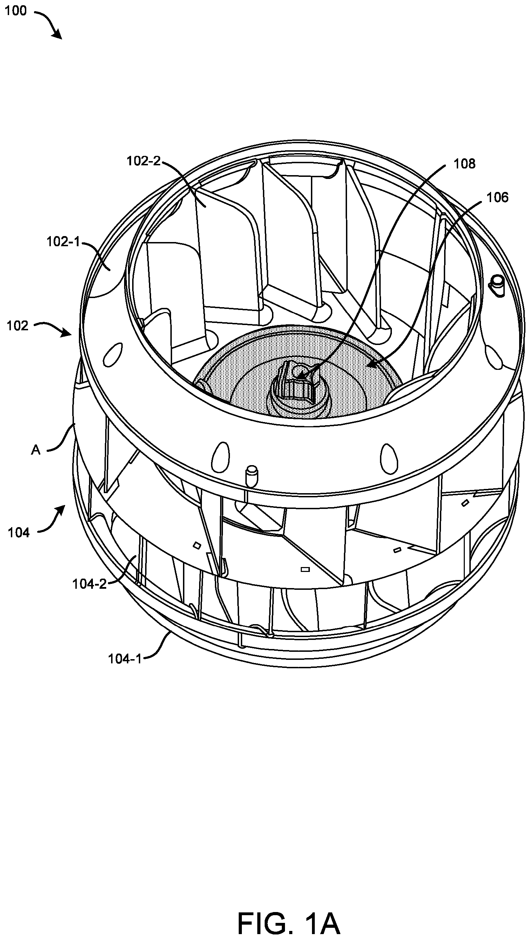

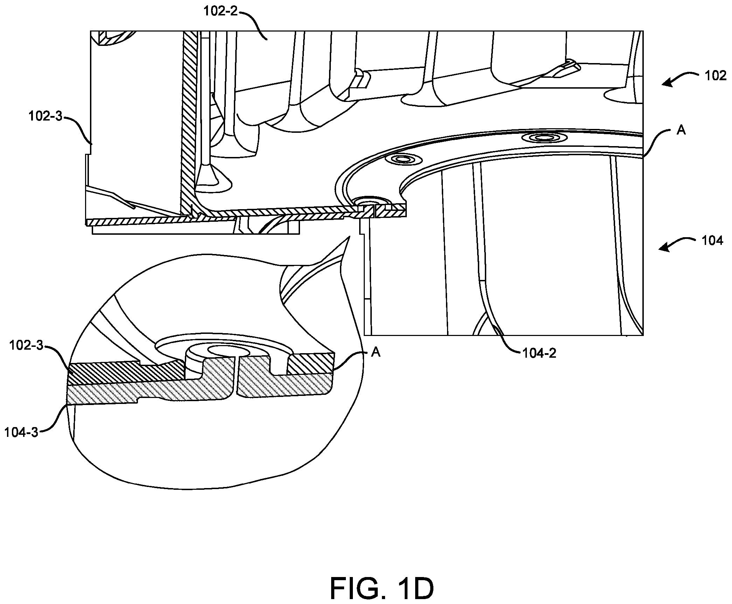

Referring to FIGs. 1A to 1F, the fan wheel 100 for a blower assembly of an HVAC system or gas furnace system is disclosed. The fan wheel 100 may include a first wheel portion 102 comprising a first plurality of impeller blades 102-2, and a second wheel portion 104 comprising a second plurality of impeller blades 104-2. The first wheel portion 102 may be over-molded to the second wheel portion 104 to attach the first wheel portion 102 to the second wheel portion 104 and correspondingly form the fan wheel 100. The first wheel portion 102 may be over-molded to the second wheel portion 104 such that an over-molded portion 106 of a predefined shape is formed at a connecting region (A) between the first wheel portion 102 and the second wheel portion 104. The fan wheel 100 may further include a central hub "hub" 108 comprising an inner threaded groove 108-1, configured coaxially at the center of the connecting region A on the first wheel portion 102 side or the second wheel portion 104 side. In one or more embodiments, the hub 108 may be integrally formed in the over-molded section, however, in other embodiments, the hub 108 may also be over-molded to the first wheel portion 102 and/or the second wheel portion 104. In addition, the hub 108 may include a threaded insert 108-2 extending perpendicularly into the threaded groove 108-1 to facilitate mounting of a drive shaft of a motor (not shown) into the threaded groove of the hub 108. The over-molding or the over-molded portion 106 may integrally attach the first wheel portion 102, the second wheel portion 104, and the hub 108 to enhance the robustness, and strength of the fan wheel 100. This may further provide the flexibility to use different materials or non-weldable materials to manufacture the components of the fan wheel 100 and also lower the manufacturing cost compared to existing welding techniques. The construction and operation of the first wheel portion 102 and the second wheel portion 104 have been described in detail in the subsequent paragraphs.

In one or more embodiments, the fan wheel 100 may be adapted to be installed within a blower assembly associated a furnace or an air handling unit (AHU) of an HVAC and/or refrigeration system. The blower assembly may include the fan wheel 100 movably positioned within a housing of the blower assembly. The blower housing may have an outer wall having a scroll-shaped design or other designs, defining a shape of the blower assembly. Further, an outlet opening and an inlet opening may be provided in the housing. The outlet opening and inlet opening may be rectangular in shape, however, the outlet opening may also be in another shapes. The outlet opening and the inlet opening may be further fluidically coupled to the ducts associated with the furnace, or AHU. The blower assembly may further include the motor (which may also be positioned within the blower housing) having a shaft that may be attached to the hub 108 of the fan wheel 100 such that actuation of the motor may rotate the fan wheel 100 within the blower housing about a longitudinal axis of the hub 108 or fan wheel 100 to circulate air through the ducts connected to the blower assembly.

In one or more embodiments, the first wheel portion 102 may be over-molded to the second wheel portion 104 using one or more molds (not shown) having a predefined inner profile. The molds may have the inner profile such that an over-molded portion 106 of a predefined shape, based on the predefined inner profile, may be formed at a connecting region A between the first wheel portion 102 and the second wheel portion 104. Once the molds are placed on one or both sides of the connecting region A, a molding material may be injected within the molds and allowed to cool, cure, or solidify to form the over-molded portion 106. The molds may then be removed and the formed over-molded portion 106 may be smoothened or machined to create a clean and smooth surface. In one or more embodiments, the over-molded portion 106 may have a circular profile in the form of a disk comprising multiple slots 110 configured circumferentially on one or both sides of the over-molded portion 106, however, the over-molded portion 106 may also have another profile. The slots 110 may be configured to accommodate a fastener of predefined weights to facilitate balancing the fan wheel 100. The molds employed for creating the over-molded portion 106 may have the predefined inner profile based on the predefined shape of the over-molded section and the hub 108 and the slots 110 to be integrally formed into a single structure (the over-molded portion 106).

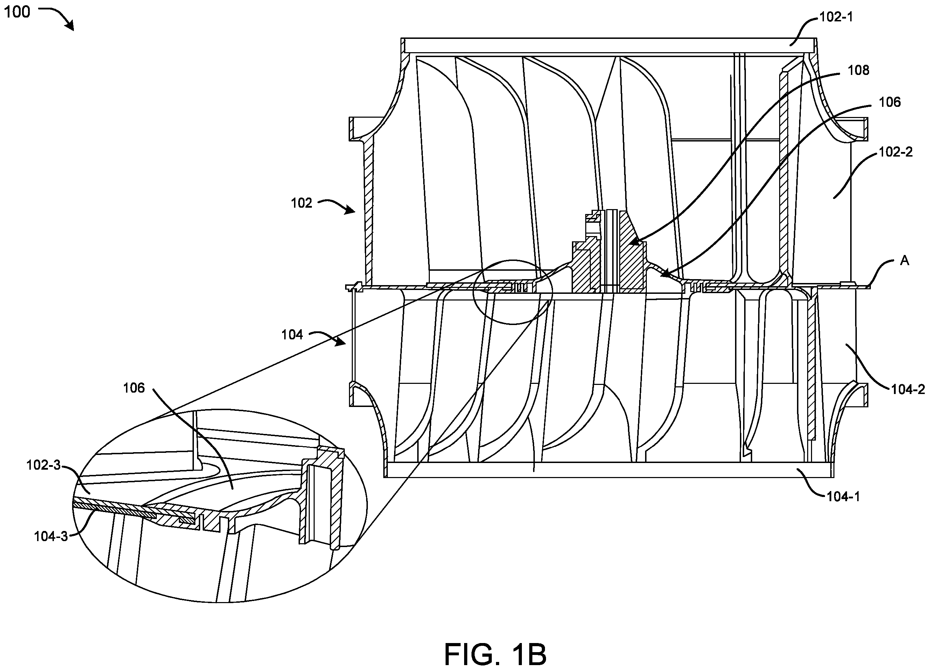

In one or more embodiments, the first wheel portion 102 may include a first shroud 102-1 at a first end and a first annular portion 102-3 (also referred to as a first connecting ring) (shown in FIGs. 1B to 1F) at a second end opposite to the first end of the first wheel portion 102. The first wheel portion 102 may further include the first plurality of impeller blades 102-2 extending between the first shroud 102-1 and the first annular portion 102-3, such that a first end of the first plurality of impeller blades 102-2 is attached to and spaced about a periphery of the first shroud 102-1 and the first annular portion 102-3 is attached to inner edges of a second end of the first plurality of impeller blades 102-2, thereby forming the first wheel portion 102.

In one or more embodiments, the second wheel portion 104 may include a second shroud 104-1 at a first end and a second annular portion 104-3 (also referred to as second connecting ring) (shown in FIGs. 1B to 1F) at a second end opposite to the first end of the second wheel portion 104. The second wheel portion 104 may further include the second plurality of impeller blades 104-2 extending between the second shroud 104-1 and the second annular portion 104-3, such that a first end of the second plurality of impeller blades 104-2 is attached to and spaced about a periphery of the second shroud 104-1 and the second annular portion 104-3 is attached to inner edges of a second end of the second plurality of impeller blades 104-2, thereby forming the second wheel portion 104.

In one or more embodiments, the fan wheel 100 may include a support ring 112 or support disk 112 positioned between the first wheel portion 102 and the second wheel portion 104 as shown in FIG. 1A, such that upon over-molding the first wheel portion 102 to the second wheel portion 104, an end of each of the first plurality of impeller blades 102-2 is supported at a first surface of the support ring 112 and an end of each of the second plurality of impeller blades 104-2 is supported at a second surface of the support ring 112. The support ring 112 may be configured to connect to the second end of both the first plurality of impeller blades 102-2 and the second plurality of impeller blades 104-2, respectively. Accordingly, the support ring 112 may form a barrier separating the blades of the first wheel portion 102 and the second wheel portion 104. As a result, the first plurality of impeller blades 102-2 may be axially spaced from the second plurality of impeller blades 104-2. The support ring 112 may have a substantially planar configuration. In one or more embodiments, the support ring 112 may have a central opening where the inner diameter of the central opening may be slightly greater than or equal to the inner diameter defined by the inner edges of at least one of the first plurality of impeller blades 104-1 and the second plurality of impeller blades 104-2, respectively. Similarly, the outer diameter of the support ring 112 may be substantially equal to the outer diameter of the fan wheel 100 which may be defined by an outer edge of at least one of the first plurality of impeller blades 104-1 and the second plurality of impeller blades 104-2.

In one or more embodiments, one or both of the first plurality of impeller blades 102-2 and the second plurality of impeller blades 104-2 may be configured as backward curved impeller blades such that the blower assembly formed may be a double inlet backward curved blower as shown in FIGs 1A to 1F. However, (not shown) embodiments where one or both of the first plurality of impeller blades 104-1 and the second plurality of impeller blades 104-2 may also have a forward curved configuration or another configuration is also contemplated herein. Further, in one or more embodiments, as shown, the first wheel portion 102 may be dissimilar from the second wheel portion 104 such that the fan wheel 100 may have an asymmetrical configuration about a plane oriented parallel to an intersecting support ring 112 or the surfaces of the annular portions, however, in other embodiments, (not shown) the first wheel portion 102 and the second wheel portion 104 may also have a symmetric configuration.

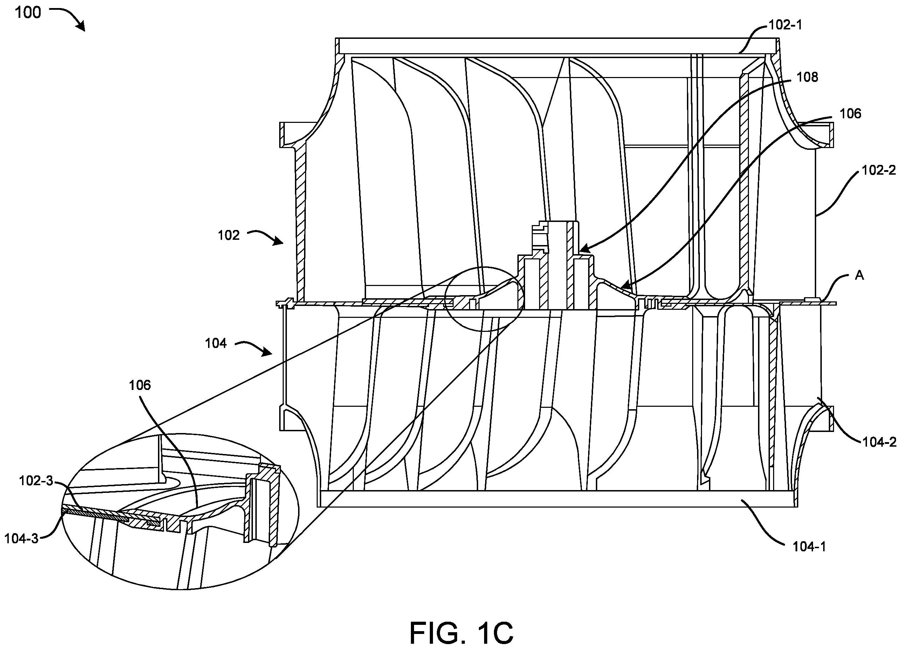

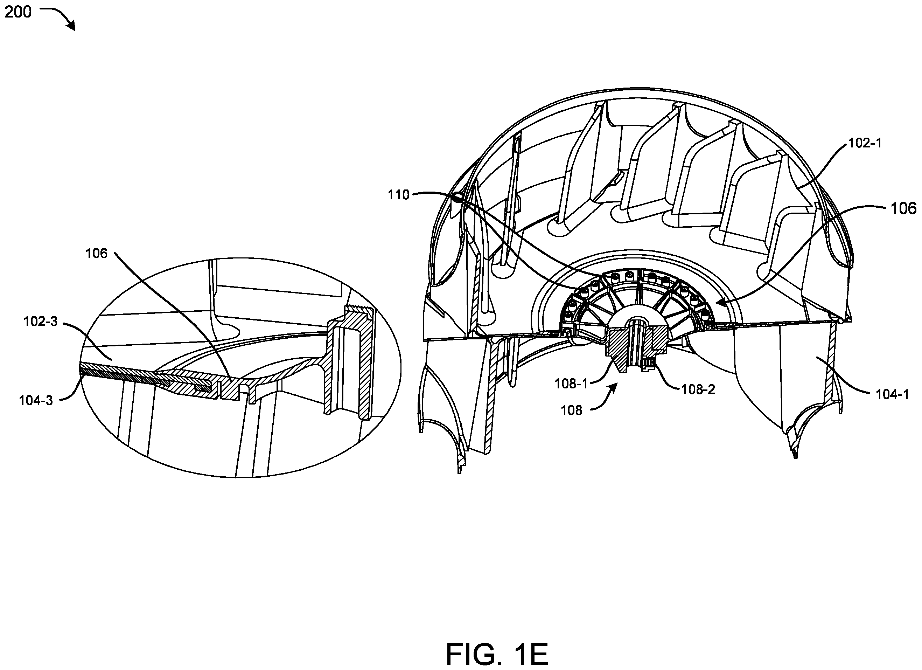

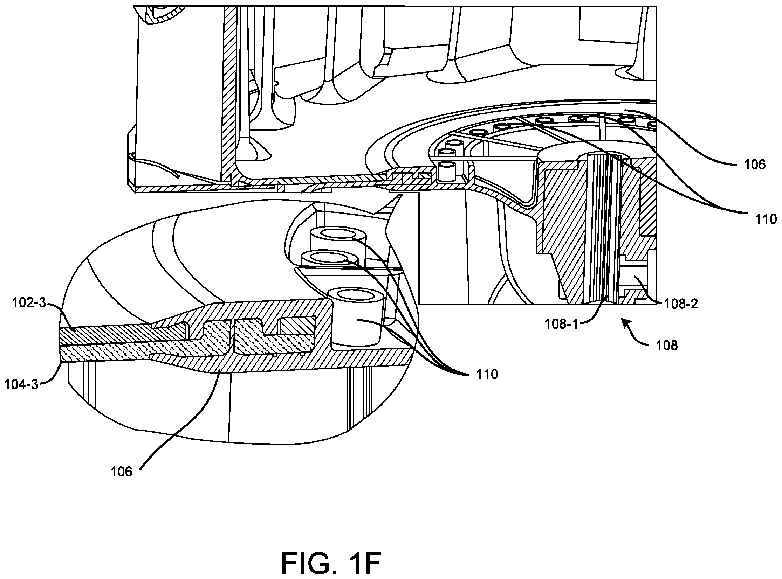

In one or more embodiments, the first wheel portion 102 may be initially connected or brought in contact with the second wheel portion 104 such that the surface of the first annular portion 102-3 of the first wheel portion 102 may be connected to the surface of the second annular portion 104-3 of the second wheel portion 104 as shown in FIG. 1C. Further, the parts 102, 104 may be securely placed and affixed on one or both sides of the annular portions and a molding material may be injected within the molds and allowing the injection molding material to cool, cure, or solidify. Furthermore, the fan wheel may be removed from the molds, thereby creating the over-molded portion 106 of the predefined shape at the annular region of the first annular portion 102-3 and the second annular portion 104-3 as shown in FIGs. 1B, 1E, and 1F. Accordingly, the over-molded portion 106 may connect the first wheel portion 102 to the second wheel portion 104 and strongly hold them together without any welding operation.

In one or more embodiments, one or more of the first wheel portion 102, the second wheel portion 104, the support ring 112, and the hub 108 may be formed from a stiff material such as aluminum, metal, alloy, polymer, or plastic material, giber glass, and composite material having a fire, heat, and corrosion resistant properties. Further, the over-molded portion 106 and/or the hub may be made from a molding material comprising Nylon 6, and the like, having a stiffness, and fire and heat-resistant capability upon solidifying.

In one or more embodiments, (not shown) the support ring 112 may include a plurality of blade receiving areas spaced about the periphery thereof. A first plurality of blade receiving areas formed in the first surface of the support ring 112 may be adapted to receive the second ends of the first plurality of impeller blades 102-2, respectively. Similarly, a second plurality of blade receiving areas formed in a second, opposite surface of the support ring 112 may be adapted to receive the second ends of the second plurality of impeller blades 104-2, respectively. The first plurality of blade-receiving areas may be substantially aligned with the second plurality of blade-receiving areas. However, in other embodiments, the first plurality of blade-receiving areas may be offset from the second plurality of blade-receiving areas.

In one or more embodiments, (not shown) the blade receiving areas may include pockets formed in the first and/or second surface of the support ring 112. The pockets may be formed by one or more sidewalls that may extend from the surfaces of the support ring 112 and that define an opening therebetween. The opening may be complementary (has a similar size and shape to the second end of the impeller blade being received therein. In one or more embodiments, where the blade receiving areas include pockets, the blades may be affixed to the support ring 112 mechanically, and no further attachment process, such as a welding operation for example, may be required to affix the first wheel portion 102 and the second wheel portion 104 to the opposite surfaces of the support ring 112, as the over-molded portion 106 holds the first wheel portion 102 and the second wheel portion 104 together. However, the blades of the first wheel portion 102 and the second wheel portion 104 may additionally be welded to the opposite surfaces of the support ring 112 with the over-molded portion 106 connecting the annular portions of the first wheel portion 102 and the second wheel portion 104.

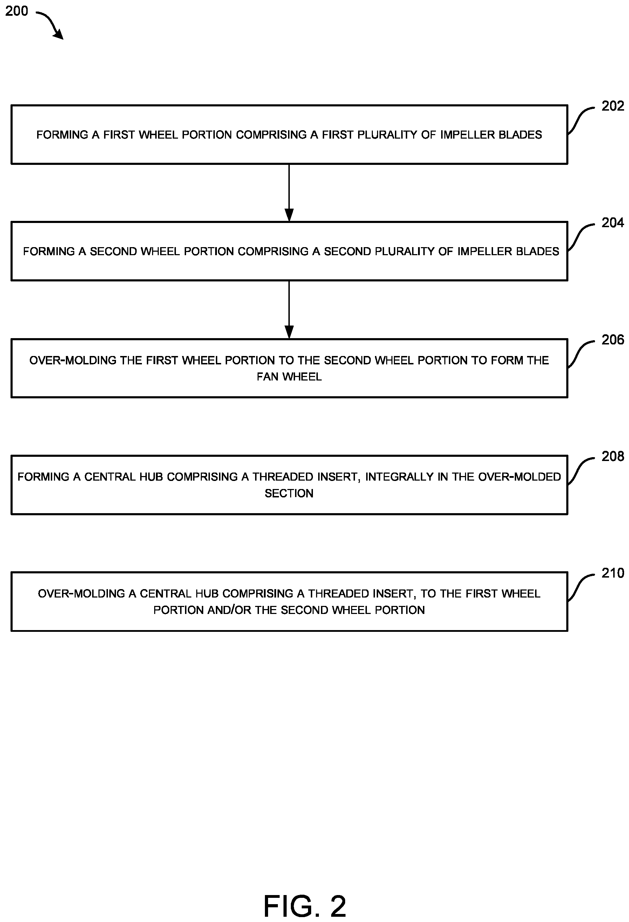

Referring to FIG. 2, method 200 for manufacturing a fan wheel 100 for a blower assembly is disclosed. Method 200 may include step 202 of forming a first wheel portion 102 comprising a first plurality of impeller blades 102-2, and another step 204 of forming a second wheel portion 104 comprising a second plurality of impeller blades 104-2. Further, method 200 may include step 206 of over-molding the first wheel portion 102 to the second wheel portion 104 to form the fan wheel 100.

In one or more embodiments, step 206 of over-molding comprises fixing one or more molds of a predefined inner profile on one or both sides of a connecting region A between the first wheel portion 102 and the second wheel portion 104, followed by injecting a molding material within the fixed molds and allowing the injection molding material to cool, or cure, or solidify. Further, the molds may be removed upon the cooling, curing, or solidifying of the molding material to form an over-molded portion 106 of a predefined shape, based on the predefined inner profile, at the connecting region A between the first wheel portion 102 and the second wheel portion 104. Accordingly, the over-molded portion 106 may attach the first wheel portion 102 to the second wheel portion 104.

In one or more embodiments, step 202 of forming the first wheel portion 102 comprises forming a first shroud 102-1, forming a first annular portion 102-3, and affixing the first plurality of impeller blades 102-2 between the first shroud 102-1 and the first annular portion 102-3, such that a first end of the first plurality of impeller blades 102-2 is attached to and spaced about a periphery of the first shroud 102-1 and the first annular portion 102-3 is attached to inner edges of a second end of the first plurality of impeller blades 102-2.

In one or more embodiments, step 204 of forming the second wheel portion 104 comprises forming a second shroud 104-1, forming a second annular portion 104-3, and affixing the second plurality of impeller blades 104-2 between the second shroud 104-1 and the second annular portion 104-3, such that a first end of the second plurality of impeller blades 104-2 is attached to and spaced about a periphery of the second shroud 104-1 and the second annular portion 104-3 is attached to inner edges of a second end of the second plurality of impeller blades 104-2.

In one or more embodiments, method 200 may include the steps of connecting and over-molding the first annular portion 102-3 to the second annular portion 104-3 to form the over-molded portion 106 of the predefined shape at an annular region of the first annular portion 102-3 and the second annular portion 104-3 and correspondingly over-molding the first wheel portion 102 to the second wheel portion 104.

In one or more embodiments, method 200 may further include step 208 of forming a central hub 108 comprising a threaded insert, integrally in the over-molded section. Accordingly, the molds employed may have the predefined inner profile based on the predefined shape of the over-molded section and the hub 108 to be integrally formed.

In other embodiments, method 200 may further include step 210 of over-molding a central hub 108 comprising a threaded insert, to the first wheel portion 102 and/or the second wheel portion 104.

In addition, in one or more embodiments, method 200 may further include the steps of forming and positioning a support ring 112 between the first wheel portion 102 and the second wheel portion 104 and further over-molding the first wheel portion 102 to the second wheel portion 104, such that upon over-molding, an end of each of the first plurality of impeller blades 102-2 is supported at a first surface of the support ring 112 and an end of each of the second plurality of impeller blades 104-2 is supported at a second surface of the support ring 112.

In one or more embodiments, step 206 of forming the over-molded portion 106 may include forming the over-molded portion 106 having a circular profile comprising one or more slots 110 being configured circumferentially on one or both sides of the over-molded portion 106. The slots 110 may be configured to accommodate a fastener of predefined weights to facilitate balancing the fan wheel 100. In one or more embodiments, method 200 may include the steps of forming one or both of the first plurality of impeller blades 102-2 and the second plurality of impeller blades 104-2 as backward curved impeller blades or as forward curved impeller blades.

Thus, the invention provides a simple, improved, cost-effective, and efficient fan wheel and a method for manufacturing the fan wheel, which does not involve welding and may allow the use of different efficient and cost-effective materials in the fan wheel.

While the subject disclosure has been described with reference to exemplary embodiments, it will be understood by those skilled in the art that various changes may be made and equivalents may be substituted for elements thereof without departing from the scope of the subject disclosure as defined by the appended claims. Modifications may be made to adopt a particular situation or material to the teachings of the subject disclosure without departing from the scope thereof. Therefore, it is intended that the subject disclosure not be limited to the particular embodiment disclosed, but that the subject disclosure includes all embodiments falling within the scope of the subject disclosure as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A fan wheel (100) comprising:
a first wheel portion (102) comprising a first plurality of impeller blades (102-2); and
a second wheel portion (104) comprising a second plurality of impeller blades (104-2),
wherein the first wheel portion is over-molded to the second wheel portion to attach the first wheel portion to the second wheel portion.

2. The fan wheel of claim 1, wherein the first wheel portion is over-molded to the second wheel portion using one or more molds having a predefined inner profile such that an over-molded portion (106) of a predefined shape, based on the predefined inner profile, is formed at a connecting region between the first wheel portion and the second wheel portion.

3. The fan wheel of any one of claims 1 and 2, wherein the first wheel portion comprises:
a first shroud (102-1) at a first end of the first wheel portion; and
a first annular portion (102-3) at a second end of the first wheel portion;
wherein the first plurality of impeller blades extends between the first shroud and the first annular portion, such that a first end of the first plurality of impeller blades is attached to and spaced about a periphery of the first shroud and the first annular portion is attached to inner edges of a second end of the first plurality of impeller blades.

4. The fan wheel of any one of claims 1 to 3, wherein the second wheel portion comprises:
a second shroud (104-1) at a first end of the second wheel portion; and
a second annular portion (104-3) at a second end of the second wheel portion;
wherein the second plurality of impeller blades extends between the second shroud and the second annular portion, such that a first end of the second plurality of impeller blades is attached to and spaced about a periphery of the second shroud and the second annular portion is attached to inner edges of a second end of the second plurality of impeller blades.

5. The fan wheel of any one of claims 1 to 4, wherein the first annular portion is connected and over-molded to the second annular portion to form the over-molded portion of the predefined shape at an annular region of the first annular portion and the second annular portion and connect the first wheel portion to the second wheel portion.

6. The fan wheel of any one of claims 1 to 5, wherein the over-molded portion has a circular profile comprising one or more slots configured circumferentially on one or both sides of the over-molded portion, wherein the one or more slots are configured to accommodate a fastener of predefined weights to facilitate in balancing the fan wheel.

7. The fan wheel of any one of claims 1 to 6, wherein the fan wheel comprises a central hub (108) integrally formed in the over-molded section; or
wherein the fan wheel comprises a central metallic hub configured coaxially at a center of a connecting region between the first wheel portion and the second wheel portion, wherein the metallic hub is over-molded to the first wheel portion and/or the second wheel portion.

8. The fan wheel of any one of claims 1 to 7, wherein the hub is adapted to accommodate a drive shaft of a motor therewithin and comprises a threaded insert (108-2) to facilitate mounting of the fan wheel to the drive shaft; and/or
wherein the fan wheel comprises a support ring (112) positioned between the first wheel portion and the second wheel portion, such that upon over-molding the first wheel portion and the second wheel portion, an end of each of the first plurality of impeller blades is supported at a first surface of the support ring and an end of each of the second plurality of impeller blades is supported at a second surface of the support ring; and/or wherein one or both of the first plurality of impeller blades and the second plurality of impeller blades is configured as backward curved impeller blades or as forward curved impeller blades.

9. A method (200) for manufacturing a fan wheel, the method comprising the steps of:
forming (202) a first wheel portion comprising a first plurality of impeller blades;
forming (204) a second wheel portion comprising a second plurality of impeller blades; and
over-molding (206) the first wheel portion to the second wheel portion to form the fan wheel.

10. The method of claim 9, wherein the method of over-molding comprises the steps of:
fixing one or more molds of a predefined inner profile on one or both sides of a connecting region between the first wheel portion and the second wheel portion;
injecting a molding material within the one or more fixed molds and allowing the injection molding material to cool, cure, or solidify; and
allowing removal of the fan wheel from the one or more molds upon the cooling, curing, or solidifying of the molding material to form an over-molded portion of a predefined shape, based on the predefined inner profile, at the connecting region between the first wheel portion and the second wheel portion, wherein the over-molded portion attaches the first wheel portion to the second wheel portion.

11. The method of any one of claims 9 and 10, wherein the method of forming the first wheel portion comprises the steps of:
forming a first shroud;
forming a first annular portion; and
affixing the first plurality of impeller blades between the first shroud and the first annular portion, such that a first end of the first plurality of impeller blades is attached to and spaced about a periphery of the first shroud and the first annular portion is attached to inner edges of a second end of the first plurality of impeller blades, and
wherein the method of forming the second wheel portion comprises the steps of:
forming a second shroud;
forming a second annular portion; and
affixing the second plurality of impeller blades between the second shroud and the second annular portion, such that a first end of the second plurality of impeller blades is attached to and spaced about a periphery of the second shroud and the second annular portion is attached to inner edges of a second end of the second plurality of impeller blades.

12. The method of any one of claims 9 to 11, wherein the method further comprises the steps of connecting and over-molding the first annular portion to the second annular portion to form the over-molded portion of the predefined shape at an annular region of the first annular portion and the second annular portion and correspondingly over-molding the first wheel portion to the second wheel portion.

13. The method of any one of claims 9 to 12, wherein the method comprises the steps of forming (208) a central hub comprising a threaded insert, integrally in the over-molded section, wherein the one or more molds have the predefined inner profile based on the predefined shape of the over-molded section and the hub to be integrally formed.

14. The method of any one of claims 9 to 12, wherein the method comprises the steps of over-molding (210) a central hub comprising a threaded insert, to the first wheel portion and/or the second wheel portion.

15. The method of any one of claims 9 to 14, wherein the method comprises the steps of forming and positioning a support ring between the first wheel portion and the second wheel portion and further over-molding the first wheel portion to the second wheel portion, such that upon over-molding, an end of each of the first plurality of impeller blades is supported at a first surface of the support ring and an end of each of the second plurality of impeller blades is supported at a second surface of the support ring; and/or wherein the method comprises the steps of forming the over-molded portion having a circular profile comprising one or more slots being configured circumferentially on one or both sides of the over-molded portion, wherein the one or more slots are configured to accommodate a fastener of predefined weights to facilitate in balancing the fan wheel; and/or
wherein the method comprises the steps of forming one or both of the first plurality of impeller blades and the second plurality of impeller blades as backward curved impeller blades or as forward curved impeller blades.
